# EUROPÄISCHE PATENTSCHRIFT

(11) **EP 1 644 173 B1**
(45) Veröffentlichungstag und Bekanntmachung des Hinweises auf die Patenterteilung: **21.10.2015**
(21) Anmeldenummer: 04716245.8
(22) Anmeldetag: 02.03.2004
(51) Int. Cl.: B29C 45/00, C08J 9/32, B29C 70/66

(54) **VERFAHREN ZUR HERSTELLUNG VON LICHTSTREUENDEN FORMTEILEN MIT HERVORRAGENDEN OPTISCHEN EIGENSCHAFTEN**
METHOD FOR THE PRODUCTION OF LIGHT-DIFFUSING MOULDED ITEMS WITH EXCELLENT OPTICAL CHARACTERISTICS
PROCEDE DE PRODUCTION DE PIECES MOULEES DISPERSANT LA LUMIERE DOTEES D'EXCELLENTES PROPRIETES OPTIQUES

(30) Priorität: 06.05.2003 DE 10320318
(43) Veröffentlichungstag der Anmeldung: 12.04.2006
(73) Patentinhaber: Evonik Röhm GmbH, 64293 Darmstadt (DE)
(72) Erfinder: HÖSS, Werner, 64347 Griesheim (DE); SCHMIDT, Arne, 64285 Darmstadt (DE); ALBRECHT, Klaus, 55129 Mainz (DE); SCHULTES, Klaus, 65197 Wiesbaden (DE)
(86) Internationale Anmeldenummer: PCT/EP2004/002059
(87) Internationale Veröffentlichungsnummer: WO 2004/098857

(56) Entgegenhaltungen:
- WO-A-03/098270
- FR-A- 2 785 221
- PATENT ABSTRACTS OF JAPAN vol. 017, no. 339 (C-1075), 28. Juni 1993 (1993-06-28) -& JP 05 039401 A (MITSUBISHI RAYON CO LTD), 19. Februar 1993 (1993-02-19)

## Beschreibung

Die vorliegende Erfindung betrifft ein Verfahren zur Herstellung von Abdeckungen für Beleuchtungskörpern, wird Polymethyl(meth)acrylat lichtstreuend oder diffus ausgestattet. Dies geschieht durch Beimischung von Streupartikeln zur Kunststoffmatrix, die gegenüber dem Pofymethyl(meth)acrylat einen unterschiedlichen Brechungsindex aufweisen.

Solche Gemische aus Polymethyl(meth)acrylat und Streupartikeln eignen sich speziell für die Lichttechnik. So beschreibt EP-A 0 656 548 gleichmäßig ausgeleuchtete Lichtleiterplatten aus einer Methylmethacrylat-Matrix und darin eingelagerten Streupartikeln aus einem vernetzten Polymerisat, welches Acrylsäureester, Methacrylsäureester und Styrol enthalten kann. Die Streupartikel besitzen eine Größenordnung von 2 - 20 µm und sind mit dem Matrixkunststoff unverträglich.

Des weiteren sind Leuchtenschirme bekannt, die Kunststoffpartikel als Streumedien enthalten. So beschreibt das Dokument JP11179856 Mehrschichtplatten mit mindestens einer Schicht, die eine Polymethylmethacrylat-Matrix sowie vernetzte Polymethylmethacrylat-Perlen als Streu-/Mattierungsmittel umfasst, wobei der Anteil der Perlen im Bereich von 0,5 bis 25 Gew.-% liegt. Die Perlen weisen eine Größe im Bereich von 3 bis 30 µm auf, wobei in den Beispielen lediglich 2 mm dicke Platten beschrieben werden, die etwa 3 Gew.-% Streuperlen einer Größe von ca. 6 µm enthalten.

In JP 05039401 A wird eine lichtstreuende Methacryl-HarzZusammensetzung duch Mischen und Dispergieren von 0,1-20 Gew.-% sphärischem Silikonharz in einem Substratharz, enthaltend mindestens 50 Gew.-% Methylmethacrylat, erhalten.

In WO 03/098270 A2 (Stand der Technik gemäß Artikel 54(3) EPÜ) wird ein Verfahren zur Herstellung eines lichtstreuenden Formteils offenbart, wobei man in einem Spritzgießverfahren eine Formmasse einsetzt, welche eine Matrix aus mindestens 60 Gew.-%, bezogen auf das Gesamtgewicht der Formmasse, Polymethyl(meth)acrylat, und darin eingelagerte sphärische Kunststoffpartikel mit einer Teilchengröße im Bereich von 0,3 bis 40 µm in einer Konzentration im Bereich von 0,0001 bis 0,2 Gew. -%, bezogen auf das Gewicht des Polymethyl(meth)acrylats, umfasst. Die Herstellung eines lichtstreuenden, komplexen Formteils, das unterschiedliche Wanddicken, einen oder mehrere Durchbruch/Durchbrüche, mindestens eine nicht ebene Oberfläche oder eine Kombination solcher Merkmale aufweist, wird jedoch nicht offenbart.

In der japanischen Offenlegungsschrift JP-A 418346 werden lichtstreuende Mehrschichtplatten mit einer Schicht aus Methylmethacrylat beschrieben, welche 1-20 Gew.-% vernetzte Styrolpartikel mit einer mittleren Partikelgröße von 1-30 µm enthält.

Die beschriebenen Formmassen werden üblicherweise durch Extrusion zu Lichtleiterplatten oder Schirmen weiterverarbeitet. Zur Herstellung komplexer geformter Teile, wie z.B. spezieller Scheinwerferabdeckungen, und Teilen mit Hohlräumen oder Durchbrüchen, müssen die extrudierten Produkte durch Umformungsverfahren weiterverarbeitet werden. Nachteilig bei dieser Verfahrensweise sind die hohen Kosten, die durch den zusätzlichen Arbeitsschritt entstehen.

In Anbetracht der zuvor angegebenen und diskutierten Probleme des Standes der Technik bestand eine Aufgabe der vorliegenden Erfindung darin, ein Verfahren zur Herstellung eines lichtstreuenden Formteils zur Verfügung zu stellen, welches besonders preiswert ist und hohe Produktivität erlaubt. Ein solches Verfahren soll mit den aus dem Stand der Technik bekannten Vorrichtungen durchführbar sein.

Ferner sollte ein Verfahren zur Verfügung gestellt werden, nach dem lichtstreuende Formteile mit hoher optischer Güte erhalten werden, bei denen das Auftreten optischer Fehler und Inhomogenitäten, wie z.B. Schlierenbildung, Wolkenbildung und Bildung deutlich sichtbarer Fließnähte weitgehend vermieden wird.

Eine weitere Aufgabe der vorliegenden Erfindung war die Bereitstellung eines Verfahrens zur Herstellung eines lichtstreuenden Formteils ohne oder mit nur sehr geringer Anzahl an Oberflächenfehlern.

Außerdem sollte durch die Erfindung ein Verfahren zur Verfügung gestellt werden das zu lichtstreuenden Formteilen mit hervorragenden Eigenschaften führt. Insbesondere sollten die Formteile eine hohe Schlagfestigkeit, Wetterfestigkeit und Kratzfestigkeit zeigen.

Weiterhin sollte ein Verfahren zur Verfügung gestellt werden, aus dem man lichtstreuende Formteile erhält, die durch Lichteinwirkung über eine längere Zeit keine Verfärbung durch lichtinduzierte chemische oder physikalische Zersetzung zeigen.

Zudem bestand die Aufgabe der Erfindung in der Bereitstellung eines Verfahrens, das zu Formteilen mit hervorragenden optischen Eigenschaften, wie z.B. Lichttransmission und Streuvermögen, führt.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch das in Anspruch 1 beschriebene Verfahren. Zweckmäßige Abwandlungen des erfindungsgemäßen Verfahrens werden in den auf Anspruch 1 rückbezogenen Unteransprüchen unter Schutz gestellt.

Dadurch, dass man komplexe lichtstreuende Formteile durch Spritzgießen aus einer Formmasse herstellt, die Polymethyl(meth)acrylat und sphärische Kunststoffpartikel mit einer Teilchengröße im Bereich von 1 bis 24 µm in einer Konzentration im Bereich von 0,05 bis 30 Gew.-% bezogen auf das Gewicht des Polymethyl(meth)acrylats umfasst, wobei die sphärischen Partikel einen Brechungsindexunterschied zur Polymethyl(meth)acrylat-Matrix von 0,01 bis 0,2 aufweisen, können solche Formteile kostengünstig und mit hoher optischer Güte hergestellt werden. Dabei wird die Formmasse in ein entsprechendes Werkzeug gespritzt, mit dem ein komplexes Formteil hergestellt werden kann.

Weiterhin werden durch die erfindungsgemäßen Maßnahmen die folgenden Vorteile erzielt:
- Es können Formteile hergestellt werden, die eine sehr geringe Anzahl optischer Fehler und Inhomogenitäten, wie Wolken, Schlieren und Fließnähte aufweisen. Wolken und Schlieren bezeichnen Trübungsstellen im Formteil, an denen die Transparenz des Teiles gegenüber den sonstigen Bereichen vermindert ist und wodurch sowohl die optimale Streuwirkung als auch das optische Erscheinungsbild gestört werden.
- Die erfindungsgemäß hergestellten Formteile weisen eine verminderte Anzahl von Oberflächenfehlern auf.
- Weiterhin weisen die erfindungsgemäß hergestellten Formteile hervorragende optische Eigenschaften auf, wie z.B. Lichttransmission, Gelbwert und Streuvermögen.
- Ebenfalls hervorragend sind die mechanischen Eigenschaften der hergestellten Formteile.
- Die hergestellten Formteile zeigen durch Lichteinwirkung über eine längere Zeit keine oder nur sehr geringe Verfärbung durch lichtinduzierte chemische oder physikalische Zersetzung.
- Diese Eigenschaften machen die erfindungsgemäß hergestellten Formteile besonders geeignet für die Anwendung in der Lichttechnik.
- Das erfindungsgemäße Verfahren zeichnet sich weiterhin durch verbesserte Fließeigenschaften der Formmasse aus.

Die in der vorliegenden Erfindung eingesetzte Spritzgießtechnik zur Verarbeitung thermoplastischer Formmassen ist dem Fachmann bekannt. Übersichten sind z.B. zu finden in:
W. Mink, Grundzüge der Spritzgießtechnik, 1. Auflage, Zechner & Hüthig Verlag, Speyer, 1966; und
Saechtling, Kunststofftaschenbuch, 26. Ausgabe, Carl Hanser Verlag, 1995.

Das Spritzgießen der Formteile kann sowohl mit der Heißkanal-Technik als auch mit der Kaltkanal-Technik durchgeführt werden. Die Heißkanal-Technik bietet gegenüber der Kaltkanal-Technik einige Vorteile, wie z.B. die Realisierung langer Fließwege, so dass man den Anschnitt an die optimale Stelle legen kann, ein verlustfreies Arbeiten durch die Vermeidung von Angußabfall, die Möglichkeit eines längeren Nachdrucks, da das Material im Anguss nicht einfriert und die Realisierbarkeit kürzerer Zykluszeiten. Von Nachteil sind u.a. die höheren Werkzeugkosten durch eine aufwendigere Konstruktion, die höhere Störanfälligkeit und die schwierigere Wartung.

Die Formmasse umfasst Polymethyl(meth)acrylat (PMMA), welches die Matrix bildet, worin die sphärischen Kunststoffpartikel eingebettet sind. Die Matrix umfasst mindestens 30 Gew.-%, bezogen auf das Gesamtgewicht der Formmasse, Polymethyl(meth)acrylat.

Die Poly(meth)acrylate der Matrix der Formmasse weisen einen Brechungsindex gemessen bei der Na-D-Linie (589 nm) und bei 20°C im Bereich von 1,46 bis 1,54 auf.

Polymethyl(meth)acrylate werden durch radikalische Polymerisation von Mischungen erhalten, die Methyl(meth)acrylat enthalten. Diese Mischungen enthalten mindestens 40 Gew.-%, vorzugsweise mindestens 60 Gew.-% und besonders bevorzugt mindestens 80 Gew.-%, bezogen auf das Gewicht der Monomere, Methyl(meth)acrylat.

Daneben können diese Mischungen zur Herstellung von Polymethyl(meth)acrylaten weitere (Meth)acrylate enthalten, die mit Methylmethacrylat copolymerisierbar sind. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole;
Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether;
Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 bis 10 Gew.-%, vorzugsweise von 0,5 bis 3 Gew.-%, bezogen auf das Gewicht der Monomeren, eingesetzt.

Hierbei können verschiedene Poly(meth)acrylate eingesetzt werden, die sich beispielsweise im Molekulargewicht oder in der Monomerzusammensetzung unterscheiden.

Des weiteren kann die Formmasse weitere Polymere enthalten, um die Eigenschaften zu modifizieren. Hierzu gehören unter anderem Polyacrylnitrile, Polystyrole, Polyether, Polyester, Polycarbonate und Polyvinylchloride. Diese Polymere können einzeln oder als Mischung eingesetzt werden, wobei auch Copolymere, die von den zuvor genannten Polymeren ableitbar sind, eingesetzt werden können.

Das Gewichtsmittel des Molekulargewichts Mw der in der Formmasse zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Es liegt im Bereich zwischen 20.000 und 1.000.000 g/mol, vorzugsweise 50.000 bis 500.000 g/mol und besonders bevorzugt 80.000 bis 300.000 g/mol.

Gemäss einer besonderen Ausführungsform der vorliegenden Erfindung weist die Formmasse mindestens 70, vorzugsweise mindestens 80 und besonders bevorzugt mindestens 90 Gew.-%, bezogen auf das Gewicht der Formmasse, Polymethyl(meth)acrylat auf.

Besonders bevorzugte Polymere zur Herstellung der Formmassen sind unter dem Handelsnamen ACRYLITE® vom Hersteller CYRO Industries kommerziell erhältlich.

Neben der zuvor beschriebenen Matrix aus Poly(meth)acrylat umfasst die Formmasse sphärische Kunststoffpartikel.

Die Größe der Kunststoffpartikel (mittlerer Durchmesser - Gewichtsmittel) liegt im Bereich von 1 bis 24 µm, vorzugsweise im Bereich von 2 bis 15 µm und noch mehr bevorzugt im Bereich von 3 bis 14 µm.

Im günstigen Fall besitzen die Partikel eine möglichst enge Größenverteilung. Vorzugsweise weisen mindestens 60 % der sphärischen Kunststoffpartikel in der im erfindungsgemäßen Verfahren eingesetzten Formmasse eine Größe von mindestens 1 µm und höchstens 30 % der sphärischen Kunststoffpartikel eine Größe von mehr als 15 µm auf.

Der Gewichtsanteil der Kunststoffpartikel, bezogen auf das Gewicht des Polymethyl(meth)acrylats, beträgt 0,05 - 30 Gew.-%. In einer bevorzugten Ausführungsform weist die eingesetzte Formmasse einen Gewichtsanteil an sphärischen Kunststoffpartikeln von 0,1 - 25 Gew.-% auf.

Vorzugsweise liegen die sphärischen Partikel gleichmäßig verteilt in der Polymethyl(meth)acrylat-Matrix der Formmasse vor, ohne dass eine nennenswerte Aggregation oder Zusammenlagerung der Partikel auftritt. Gleichmäßig verteilt bedeutet, dass die Konzentration an Partikeln innerhalb der Matrix im wesentlichen konstant ist.

Die Mischung der Matrix mit den Kunststoffpartikel zur Formmasse, welche im erfindungsgemäßen Spritzgießverfahren eingesetzt wird, erfolgt vorzugsweise durch Schmelzemischung mittels eines Einschnecken- oder Doppelschneckenextruders, ohne dass hierdurch eine Beschränkung erfolgen soll.

Der Begriff sphärisch bezeichnet im Rahmen der vorliegenden Erfindung, dass die Kunststoffpartikel vorzugsweise eine kugelförmige Gestalt aufweisen, wobei dem Fachmann offensichtlich ist, dass aufgrund der Herstellungsmethoden auch Kunststoffpartikel mit anderer Gestalt enthalten sein können, oder dass die Form der Kunststoffpartikel von der idealen Kugelgestalt abweichen kann.

Dementsprechend bedeutet der Begriff sphärisch, dass das Verhältnis von der größten Ausdehnung der Kunststoffpartikel zur geringsten Ausdehnung maximal 4, vorzugsweise maximal 2 beträgt, wobei diese Ausdehnungen jeweils durch den Schwerpunkt der Kunststoffpartikel gemessen werden. Vorzugsweise sind mindestens 70%, besonders bevorzugt mindestens 90%, bezogen auf die Zahl der Kunststoffpartikel, sphärisch.

Die Ermittlung der Teilchengröße sowie der Teilchengrößenverteilung kann mittels Laserextinktionsverfahren erfolgen. Hierzu kann ein Galai-CIS-1 der Firma L.O.T. GmbH verwendet werden, wobei die Messmethode zur Bestimmung der Teilchengröße im Benutzerhandbuch enthalten ist.

Die erfindungsgemäss verwendbaren Kunststoffpartikel sind nicht besonders beschränkt. So ist die Art des Kunststoffs aus dem die Kunststoffpartikel hergestellt werden weitgehend unkritisch, wobei an der Phasengrenze der Kunststoffperlen zum Matrixkunststoff eine Brechung des Lichts stattfindet.

Dementsprechend weist der Brechungsindex der Kunststoffpartikel eine bei der Na-D-Linie (589 nm) und bei 20°C gemessene Brechzahl nₒ auf, die sich um 0,01 bis 0,2 Einheiten von der Brechzahl nₒ des Matrixkunststoffs unterscheidet.

Besonders bevorzugt werden Kunststoffpartikel eingesetzt, die eine Temperaturbeständigkeit von mindestens 200°C, insbesondere von mindestens 250°C aufweisen, ohne dass hierdurch eine Beschränkung erfolgen soll. Hierbei bedeutet der Begriff temperaturbeständig, dass die Teilchen im wesentlichen keinem wärmebedingten Abbau unterliegen. Die Temperaturstabilität kann durch thermogravimetrische Bestimmung ermittelt werden. Die Bestimmungsmethodik ist dem Fachmann geläufig. Bei Anwendung des Verfahrens tritt bis zur angegeben Temperatur unter Schutzgas ein Masseverlust an der zu messenden Kunststoffprobe von nicht mehr als 2 Gew.-% auf.

Bevorzugte Kunststoffpartikel sind aufgebaut aus:
b1) 25 bis 99,9 Gew.-Teilen von Monomeren, die aromatische Gruppen als Substituenten aufweisen, wie beispielsweise Styrol, α-Methylstyrol, ringsubstituierte Styrole und halogenierte Styrole, Phenyl(meth)acrylat, Benzyl(meth)acrylat, 2-Phenylethyl(meth)acrylat, 3-Phenylpropyl(meth)-acrylat oder Vinylbenzoat; sowie
b2) 0 bis 60 Gew.-Teilen eines Acryl- und/oder Methacrylsäureesters mit 1 bis 12 C-Atomen im aliphatischen Esterrest, die mit den Monomeren b1) copolymerisierbar sind, wobei beispielhaft genannt seien: Methyl(meth)acrylat, Ethyl(meth)acrylat, n-Propyl(meth)acrylat, i-Propyl(meth)acrylat, n-Butyl(meth)acrylat, i-Butyl(meth)acrylat, tert.Butyl(meth)acrylat, Cyclohexyl(meth)acrylat, 3,3,5-Trimethylcyclohexyl(meth)acrylat, 2-Ethylhexyl(meth)acrylat, Norbornyl(meth)acrylat oder Isobornyl(meth)acrylat;
b3) 0,1 bis 15 Gew.-Teilen vernetzenden Comonomeren, die mindestens zwei ethylenisch ungesättigte, radikalisch mit b1) und gegebenenfalls mit b2) copolymerisierenbare Gruppen aufweisen, wie beispielsweise Divinylbenzol, Glykoldi(meth)acrylat, 1,4-Butandioldi(meth)acrylat, Polyethylenglycoldimethacrylat, Allyl(meth)acrylat, Triallylcyanurat, Diallylphthalat, Diallylsuccinat, Pentaerythrittetra(meth)acrylat oder Trimethylolpropantri(meth)acrylat, wobei sich die Comonomeren b1), b2) und b3) zu 100 Gew.-Teilen ergänzen.

Die voranstehend beschriebenen Kunststoffpartikel und Formmassen, die diese Partikel und Poly(methyl)methacrylat enthalten, sind beschrieben in EP 0 656 548.

Die Herstellung von vernetzten Kunststoffpartikeln ist in der Fachwelt bekannt. So können die Streupartikel durch Emulsionspolymerisation hergestellt werden, wie beispielsweise in EP-A 342 283 oder EP-A 269 324 beschrieben, ganz besonders bevorzugt durch Polymerisation in organischer Phase, wie beispielsweise in der deutschen Patentanmeldung P 43 27 464.1 beschrieben, wobei bei der letztgenannten Polymerisationstechnik besonders enge Teilchengrößenverteilungen oder anders ausgedrückt besonders geringe Abweichungen der Teilchendurchmesser vom mittleren Teilchendurchmesser auftreten.

Besonders bevorzugte Kunststoffpartikel umfassen vernetzte Polystyrole. Solche Partikel können durch Suspensionspolymerisation eines Styrolmonomers, wie voranstehend unter b1) aufgezählt, und eines vernetzenden Monomers, wie voranstehend unter b3) aufgezählt, erhalten werden, wobei Styrol und Divinylbenzol besonders bevorzugt sind. Ebenso kann eine Mischung mehrerer Styrolmonomer aus b1) verwendet werden. Der Gewichtsanteil des Styrolpolymers in den Partikeln beträgt bevorzugt 80 bis 95 Gew.-%. Der Gewichtsanteil des vernetzenden Monomers beträgt bevorzugt 5-20%. Angesichts der Gleichmäßigkeit der Lichtdiffusion und des optischen Erscheinungsbildes werden bevorzugt Polystyrolpartikel verwendet, die durch Suspensionspolymerisation hergestellt wurden, wie in JP 64 266 17, JP 1 146 910, JP 1172412 und JP-A 418 346 beschrieben. In JP-A 418346 sind auch Formmassen beschrieben, die Polystyrolpartikel und Poly(methyl)methacrylat umfassen.

Ferner sind besonders bevorzugte Partikel aus vernetztem Polystyrol von Sekisui Plastics Co., Ltd. unter den Handelsnamen Techpolymer® SBX-4, Techpolymer® SBX-6, Techpolymer® SBX-8 und Techpolymer® SBX-12 kommerziell erhältlich.

Weitere besonders bevorzugte sphärische Kunststoffpartikel, die als Streumittel eingesetzt werden, enthalten Silikone. Solche Partikel werden zum Beispiel durch Hydrolyse und Polykondensation von Organotrialkoxysilanen und/oder Tetraalkoxysilanen erhalten, welche durch die Formeln

R¹Si(OR²)₃ und Si(OR²)₄

beschrieben werden, worin R¹ beispielsweise eine substituierte oder unsubstituierte Alkylguppe, eine Alkenylgruppe oder eine Phenylgruppe darstellt, und der Rest R² der hydrolisierbaren Alkoxygruppe eine Alkylgruppe, wie Methyl, Ethyl oder Butyl oder eine Alkoxy-substituierte Kohlenwasserstoffgruppe, wie 2-Methoxyethyl oder 2-Ethoxyethyl darstellt. Beispielhafte Organotrialkoxysilane sind Methyltrimethoxysilan, Methyltriethoxysilan, Methyl-n-propoxysilan, Methyltriisopropoxysilan und Methyltris(2-methoxyethoxy)silan.

Die zuvor genannten Silanverbindungen und Verfahren zur Herstellung sphärischer Silikonpartikel daraus sind der Fachwelt bekannt und den Schriften EP 1 116 741, JP 63-077940 und JP 2000-186148 entnehmbar.

In der vorliegenden Erfindung besonders bevorzugt eingesetzte Streumittel aus Silikon sind von der Firma GE Bayer Silicones unter den Handelsnamen TOSPEARL® 120 und TOSPEARL® 3120 erhältlich.

Die Formmassen zur Herstellung des Formteils können übliche Additive/Zusatzstoffe aller Art enthalten. Hierzu gehören unter anderem Farbstoffe, Antistatika, Antioxidantien, Entformungsmittel, Flammschutzmittel, Schmiermittel, Fliessverbesserungsmittel, Füllstoffe, Lichtstabilisatoren und organische Phosphorverbindungen, wie Phosphite oder Phosphonate, Pigmente, Verwitterungsschutzmittel und Weichmacher. Die Menge an Zusatzstoffen ist jedoch auf den Anwendungszweck beschränkt. So sollte die lichtstreuende Eigenschaft der Formmasse sowie deren Transparenz nicht zu stark durch Additive beeinträchtigt werden.

Gemäß einem besonderen Aspekt der vorliegenden Erfindung kann die Formmasse gegebenenfalls durch einen Schlagzähmodifier mechanisch stabiler ausgerüstet werden. Derartige Schlagzähmodifizierungsmittel für Polymethacrylat-Kunststoffe sind hinlänglich bekannt, so sind die Herstellung und der Aufbau von schlagzähmodifizierten Polymethacrylat-Formmassen unter anderem in EP-A 0 113 924, EP-A 0 522 351, EP-A 0 465 049 und EP-A 0 683 028 beschrieben.

Bevorzugte schlagzähe Formmassen weisen 70 - 99 Gew.-% Polymethyl(meth)acrylate auf. Diese Polymethyl(meth)acrylate wurden zuvor beschrieben.

Gemäß einem besonderen Aspekt der vorliegenden Erfindung werden die zur Herstellung von schlagzähmodifizierten Formmassen verwendeten Polymethyl(meth)acrylate durch radikalische Polymerisation von Mischungen erhalten, die 80 bis 100 Gew.-%, vorzugsweise 90 - 98 Gew.-%, Methylmethacrylat und gegebenenfalls 0 - 20 Gew.-%, bevorzugt 2-10 Gew.-% weitere radikalisch polymerisierbare Comonomere umfassen, die ebenfalls zuvor aufgeführt wurden. Besonders bevorzugte Comonomere sind unter anderem C₁- bis C₄-Alkyl(meth)acrylate, insbesondere Methylacrylat, Ethylacrylat oder Butylmethacrylat.

Vorzugsweise liegt das mittlere Molekulargewicht Mw der Polymethyl(meth)acrylate zur Herstellung besonders schlagzäher Formmassen im Bereich von 90.000 g/mol bis 200.000 g/mol, insbesondere 100.000 g/mol bis 150.000 g/mol.

Bevorzugte schlagzähe Formmassen enthalten 1 bis 60, bevorzugt 2 bis 50, besonders bevorzugt 3 bis 45, insbesondere 5 bis 42 Gew.-% eines Schlagzähmodifizierungsmittels, welches eine Elastomerphase aus vernetzten Polymerisatteilchen darstellt.

Das Schlagzähmodifizierungsmittel kann in an sich bekannter Weise durch Perlpolymerisation oder durch Emulsionspolymerisation erhalten werden.

Bevorzugte Schlagzähmodifizierungsmittel stellen vernetzte Teilchen mit einer mittleren Teilchengröße im Bereich von 50 bis 1000 nm, bevorzugt 60 bis 500 nm und besonders bevorzugt 80 bis 450 nm dar.

Derartige Partikel können beispielsweise durch die radikalische Polymerisation von Mischungen erhalten werden, die in der Regel mindestens 40 Gew.-%, bevorzugt 50 bis 70 Gew.-% Methylmethacrylat, 20 bis 50 Gew.-%, bevorzugt 25 bis 45 Gew.-% Butylacrylat sowie 0,1 bis 2, bevorzugt 0,5 bis 1 Gew.-% eines vernetzenden Monomeren, z. B. einem mehrfunktionellen (Meth)acrylat, wie z. B. Allylmethacrylat und Comonomeren enthalten, die mit den zuvor genannten Vinylverbindungen copolymerisiert werden können.

Zu den bevorzugten Comonomeren gehören unter anderem C₁-C₄-Alkyl(meth)acrylate, wie Ethylacrylat oder Butylmethacrylat, bevorzugt Methylacrylat, oder andere vinylisch polymerisierbare Monomere wie z. B. Styrol. Die Mischungen zur Herstellung der zuvor genannten Partikel können vorzugsweise 0 bis 30, bevorzugt 0,5 bis 15 Gew.-% Comonomere umfassen.

Besonders bevorzugte Schlagzähmodifizierungsmittel sind Polymerisatteilchen, die einen zwei-, besonders bevorzugt einen dreischichtigen Kern-Schale-Aufbau aufweisen. Derartige Kern-Schale-Polymerisate sind unter anderem in EP-A 0 113 924, EP-A 0 522 351, EP-A 0 465 049 und EP-A 0 683 028 beschrieben.

Besonders bevorzugte Schlagzäh-Modifier auf Basis von Acrylatkautschuk haben unter anderem folgenden Aufbau:

| | |
|---|---|
| Kern: | Polymerisat mit einem Methylmethacrylatanteil von mindestens 90 Gew.-%, bezogen auf das Gewicht des Kerns. |
| Schale 1: | Polymerisat mit einem Butylacrylatanteil von mindestens 80 Gew.-%, bezogen auf das Gewicht der ersten Schale. |
| Schale 2: | Polymerisat mit einem Methylmethacrylatanteil von mindestens 90 Gew.-%, bezogen auf das Gewicht der zweiten Schale. |

Der Kern sowie die Schalen können neben den genannten Monomeren jeweils weitere Monomere enthalten.

Beispielsweise kann ein bevorzugter Acrylatkautschuk-Modifier folgenden Aufbau aufweisen:

| | |
|---|---|
| Kern: | Copolymerisat aus Methylmethacrylat (95,7 Gew.-%), Ethylacrylat (4 Gew.-%) und Allylmethacrylat (0,3 Gew.-%) |
| S1: | Copolymerisat aus Butylacrylat (81,2 Gew.-%), Styrol (17,5 Gew.-%) und Allylmethacrylat (1,3 Gew.-%) |
| S2: | Copolymerisat aus Methylmethacrylat (96 Gew.-%) und Ethylacrylat (4 Gew.-%) |

Das Verhältnis von Kern zu Schale(n) der Acrylatkautschuk-Modifier kann in weiten Bereichen schwanken. Vorzugsweise liegt das Gewichtsverhältnis Kern zu Schale K/S im Bereich von 20:80 bis 80:20, bevorzugt von 30:70 zu 70:30 bis Modifiern mit einer Schale bzw. das Verhältnis von Kern zu Schale 1 zu Schale 2 K/S1/S2 im Bereich von 10:80:10 bis 40:20:40, besonders bevorzugt von 20:60:20 bis 30:40:30 bei Modifiern mit zwei Schalen.

Die Partikelgröße der Kern-Schale-Modifier liegt üblich im Bereich von 50 bis 1000 nm, vorzugsweise 100 bis 500 nm und besonders bevorzugt von 150 bis 450 nm, ohne daß hierdurch eine Beschränkung erfolgen soll.

Derartige Schlagzähmodifier sind von der Fa. Mitsubishi unter dem Handelsnamen METABLEN® IR 441 kommerziell erhältlich. Darüber hinaus können auch schlagzäh-modifizierte Formmassen erhalten werden. Hierzu gehört unter anderem ACRYLITE PLUS® vom Hersteller CYRO Industries.

Das erfindungsgemäße Spritzgießverfahren zur Herstellung komplexer lichtstreuender Formteile von hoher optischer Güte wird bevorzugt auf die nachfolgend beschriebene Art und Weise durchgeführt:
Die Temperatur der geschmolzenen Formmasse bei dem erfindungsgemäßen Spritzgießverfahren beträgt vorzugsweise 210-270 °C und noch mehr bevorzugt 240-250 °C, ohne dass hierdurch eine Einschränkung erfolgen soll.

Des weiteren beträgt die Temperatur der Spritzgießdüse bevorzugt 230-270 °C, noch mehr bevorzugt 240-250 °C, und die Temperatur des Spritzgießwerkzeugs beträgt bevorzugt 40-80 °C und noch mehr bevorzugt 50-60 °C.

Die Temperatur des Spritzgießzylinders beträgt vorzugsweise 220-260 °C und noch mehr bevorzugt 230-250°C.

Die Formmasse wird in dem erfindungsgemäßen Verfahren mit einem Druck im Bereich von 50 bar bis 1000 bar in das Werkzeug eingespritzt. Dabei kann der Druck in einer besonderen Ausführungsform gestuft sein und beträgt in der ersten Stufe 50 bar und in der zweiten Stufe 400 bar. Ebenso kann die Einspritzgeschwindigkeit gestuft sein und liegt in der ersten Stufe im Bereich von 0,01 m/s bis 0,1 m/s in der zweiten Stufe im Bereich von 0,1 m/s bis 1 m/s und in einer möglichen dritten Stufe im Bereich von 0,05 m/s bis 0,5 m/s. Dabei beträgt der Dosierweg vorzugsweise das 1- bis 4fache des Schneckendurchmessers

Es wurde überraschenderweise gefunden, dass optische Inhomogenitäten, wie Wolken und Schlieren und Bindenähte bei komplexen Formteilen wirkungsvoll vermieden werden können, wenn man das erfindungsgemäße Verfahren zu deren Herstellung anwendet.

Werden sphärische Kunststoffpartikel mit einer mittleren Größe von 1-24 µm in einer Matrix aus Polymethyl(meth)acrylat in einem Spritzgießverfahren eingesetzt, so können komplexe Formteile von besonders guter optischer Qualität und Homogenität und weitgehend ohne Wolken, Schlieren und Bindenähten hergestellt werden. Besonders gut können diese optischen Fehler vermieden werden, wenn Streumittel auf Basis von vernetzten Silikonen oder vernetztem Polystyrol mit einer mittleren Teilchengröße von 2-15 µm in einer Matrix aus Polymethyl(meth)acrylat verwendet werden.

Bei komplexen Formteilen, wie z.B. solchen mit variabler Dicke und/oder Durchbrüchen, treten optische Fehlstellen wie Wolken, Schlieren und Bindenähte normalerweise besonders leicht auf. Dickenunterschiede in der entsprechenden Spritzgießform und insbesondere Durchbrüche, d.h. Bereiche einer Form, die von der Schmelze umspritzt werden, haben einen starken Einfluß auf das rheologische Füllverhalten des Werkzeughohlraumes, auch Kavitäten genannt. Durch das sogenannte "Vor- oder Nacheilen" von Teilen der Schmelze kann die Bildung von Wolken- Schlieren und Bindenähten verstärkt werden.

Ein komplexes Formteil nach dem Verständnis der vorliegenden Erfindung ist ein Formteil, das eines oder mehrere der nachfolgend beschriebenen Merkmale aufweist.

Gemäß einer Ausführungsform des erfindungsgemäßen Verfahrens weist ein komplexes Formteil unterschiedliche Wanddicken auf. Bevorzugt wird ein Formteil erhalten, dessen Wanddicke im Bereich von 1 - 30 mm liegt und innerhalb des Formteils variieren kann. Die Variation der Wanddicke kann z.B. durch die Differenz zwischen minimaler und maximaler Wanddicke des Formteils angegeben werden, wobei diese Differenz mehr als 1 mm, vorzugsweise mehr als 5 mm und besonders bevorzugt mehr als 10 mm beträgt. Das Verhältnis von maximaler zu minimaler Wanddicke liegt vorzugsweise im Bereich von ≥ 1:20 und mehr bevorzugt im Bereich von ≥ 1:10, besonders bevorzugt bei ≥ 1:4 und am meisten bevorzugt bei ≥ 1:2.

Gemäß einer weiteren Ausführungsform des erfindungsgemäßen Verfahrens weist ein komplexes Formteil mindestens einen Durchbruch auf. An der Stelle eines Durchbruches beträgt die Wanddicke des Formkörpers Null. Die einen Durchbruch umgebende Formmasse kann im umgebenden Bereich eine gleichmäßige oder variierende Wanddicke ausbilden, wobei die Wanddicke bevorzugt innerhalb des oben angegebenen Bereiches liegt.

Weiterhin wird durch eine Abwandlung des zuvor beschriebenen Verfahrens ein komplexes Formteil hergestellt, das mindestens eine nicht ebene Oberfläche aufweist. Vorzugsweise ist eine solche Oberfläche konvex oder konkav ausgebildet.

Die durch das erfindungsgemäße Verfahren hergestellten Formteile weisen vorzugsweise die nachfolgend genannten Eigenschaften auf. Eine besondere Ausführungsform des Formteils, welches aus dem erfindungsgemäßen Verfahren erhalten wird, weist einen Energiehalbwertswinkel von ≥ 5°, insbesondere ≥ 14° auf.

Eine weitere besondere Ausführungsform des Formteils, welches aus dem erfindungsgemäßen Verfahren erhalten wird, weist einen Intensitätshalbwertswinkel von ≥ 1,5°, insbesondere ≥ 10°C auf.

Gemäß einem besonderen Aspekt der vorliegenden Erfindung zeigt das erfindungsgemäß hergestellte Formteil bei einer Schichtdicke von 3 mm eine Lichttransmission von größer oder gleich 25%, insbesondere größer oder gleich 40% und besonders bevorzugt größer oder gleich 50%.

Vorzugsweise zeigt das erfindungsgemäß hergestellte Formteil einen Gelbwert,bestimmt gemäß DIN 6167 von kleiner oder gleich 12, insbesondere kleiner oder gleich 10, ohne dass hierdurch eine Beschränkung erfolgen soll.

Weiterhin zeigen die erfindungsgemäß hergestellten Formteile hervorragende mechanische Eigenschaften. So können Formteile erhalten werden, die eine Charpy Schlagzähigkeit gemäß ISO 179 von ≥ 80 KJ/m² aufweisen. Die Streckspannung gemäß ISO 527 kann auf ≥ 70 MPa eingestellt werden. Auch eine nominelle Bruchdehnung von > 50% gemäß ISO 527 ist hervorragend.

Nachfolgend wird die Erfindung durch Beispiele und Vergleichsbeispiele eingehender erläutert, ohne dass die Erfindung auf diese Beispiele beschränkt werden soll.

### A) Meßmethoden

Die Transmission D65/2° wurde gemäss DIN 5036 mit einem Messgerät Lambda 19 der Fa. Perkin Elmer bestimmt.

Der Gelbwert D65/10° wurde gemäss DIN 6167 mit einem Messgerät Lambda 19 der Fa. Perkin Elmer bestimmt.

Das Streuvermögen wird durch die Messung des Energiehalbwertswinkels und des Intensitätshalbwertswinkels gemäss DIN 5036 mit einem Messgerät LMT-Goniometer-Messplatz GO-T-1500 der Fa. LMT bestimmt.

Die Ermittlung der Teilchengröße sowie der Teilchengrößenverteilung erfolgte mittels einem Laserextinktionsverfahren. Hierzu wurde ein Galai-CIS-1-Gerät der Firma L.O.T. GmbH verwendet, wobei die Messmethode zur Bestimmung der Teilchengröße im Benutzerhandbuch beschrieben ist.

### B) Charakterisierung der eingesetzten Streumittel

Im den erfindungsgemäßen Beispielen wurden zum einen die Streumittel Techpolymer® SBX-8 (Hersteller: Sekisui Chemical Co. Ltd, Japan), TOSPEARL® 120 und TOSPEARL® 3120 (Hersteller: GE Bayer Silicones) eingesetzt.

In einem weiteren erfindungsgemäßen Beispiel wurde eine Abmischung aus einem Polymerisat C, hergestellt analog Beispiel 2 in EP 1 219 641 A1 mit einer handelsüblichen Formmasse (Polymerisat A) aus 96 Gew.-% Methylmethacrylat und 4 Gew.-% Methylacrylat als Matrix eingesetzt.

Als Vergleichsbeispiel diente Polymerisat B, bestehend aus Polymerisat A mit einem Anteil von 6 Gew.-% sphaerischer lichtstreuender Kunststoffpartikel auf Basis von Poly(meth)acrylat-Copolymeren (Polymerisat D) mit einem mittleren Teilchendurchmesser von ca. 50 µm. Tabelle 1 zeigt eine Zusammenstellung über die Eigenschaften der in den erfindungsgemäßen Beispielen eingesetzten Streumittel.

**Tabelle 1: Charakteristika der Streumittel**

| | 1 | 2 | 3 | 4 | 5 |
|---|---|---|---|---|---|
| Streumittel | Polymerisat C | TECHPOLY MER® SBX-8 | TOSPEARL® 120 | TOSPEARL® 3120 | Polymerisat D |
| Brechungsindex n_{D20} | 1,525 | 1,590 | 1,48 | 1,48 | 1,525 |
| Dichte [g/cm³] | n.b. | 1,06 | 1,32 | 1,32 | n.b. |
| mittlere Partikelgröße [µm] | 20 | 8 | 2 | 12 | 20 |
| spez. Oberfläche [m²/g] | n.b. | n.b. | 15-35 | 18 | n.b. |

### C) Herstellung der Formmassen

Mit den in Tabelle 1 genannten Streumitteln wurden Formmassen in der Konzentration hergestellt, die zur Erreichung vergleichbarer optischer Eigenschaften wie bei dem Verkaufsprodukt Polymerisat B (Vergleichsbeispiel 1, Hersteller: Röhm GmbH & Co. KG, Deutschland) nötig sind. Nach dem Einwiegen der Komponenten wurde die Mischung taumelgemischt und auf einem Einschneckenextruder compoundiert.

Tabelle 2 beinhaltet die Eigenschaften von Formmassen, wie sie im Stand der Technik (Vergleichsbeispiele) bzw. im erfindungsgemäßen Verfahren eingesetzt werden (Beispiele C-1 bis C-5). Als Matrixmaterial diente in allen Fällen Polymerisat A.

Eine Formmasse mit 0,3% TOSPEARL® 120 zeigt annähernd gleiche optische Eigenschaften wie Polymerisat B (Vergleichsbeispiel C-1, Tabelle 2). Bei Einsatz von Techpolymer® SBX-8 als Streumittel ist die Transmission etwas geringer als bei Polymerisat B.

**Tabelle 2: Eigenschaften der Formmassen**

| | Beispiel C-1 | Beispiel C-2 | Beispiel C-3 | Beispiel C-4 | Beispiel-C-5 | Vergleichsbeispiel C-1 |
|---|---|---|---|---|---|---|
| Formmasse | 0,4% TECHPOLYMER® SBX-8 in Polymerisat A | 0,1% TOSPEARL® 120 in Polymerisat A | 0,3% TOSPEARL® 120 in Polymerisat A | 0,6% TOSPEARL® 3120 in Polymerisat A | 3% Polymerisat C in Polymerisat A | Polymerisat B |
| Energiehalbwertswinkel [°] | 16,8 | 10,3 | 17,6 | 14 | 13,5 | 14,9 |
| Intensitäts-halbwertswinkel [°] | 2,5 | 1,5 | 12,5 | 2,5 | 12,5 | 14,5 |
| Lichttransmission [%] | 83,8 | 93,6 | 89,2 | 92,4 | 93,0 | 92,1 |
| Gelbwert [-] | 3,7 | -0,25 | 0,9 | 0,3 | 1,0 | 1,9 |
| MVR [cm³/10 min] | 5,0 | 5,2 | 5,1 | 5,3 | 4,7 | 4,7 |

### D) Spritzgießparameter

Alle Formmassen wurden unter den gleichen Verarbeitungsparametern (siehe Tabelle 3) spritzgegossen. Bei Zusatz von TOSPEARL® und Techpolymer® SBX-8 wurde eine Verbesserung der Fließeigenschaften der Formmassen festgestellt.

**Tabelle 3: Einstellparameter für die Spritzgiessverarbeitung der Formmassen (Spritzgießmaschine DEMAG D 150)**

| *Temperaturen[°C]* | |
|---|---|
| Schmelze | 245 |
| Zylinder | 230; 235; 240; 245 |
| Werkzeug | 55 |
| Heisskanal (Düse, Kanal) | 246; 246 |
| | |
| *Dosierweg* | 26 mm |
| | |

| *Einspritzgeschwindigkeit (gestuft)* | |
|---|---|
| Stufe 1 (23 mm - 20 mm) | 13 |
| Stufe 2 (20 mm - 15 mm) | 16 |
| Stufe 3 (15 mm - 0 mm) | 13 |
| | |

| *Nachdruck (gestuft)* | |
|---|---|
| Nachdruckumschaltung | wegabhängig bei 5 mm Schneckenweg |
| Stufe 1 (18 s) | 82 |
| Stufe 2 (8 s) | 75 |

### E) Herstellung von Formteilen und Beurteilung der optischen Qualität

### Beispiel 1: Formteil aus Polymerisat A mit Streumittel Techpolymer® SBX-8

Zur Herstellung der Formmasse wurden in eine 30 I-Mischtrommel 10 kg Polymerisat A und 0,3 kg Techpolymer® SBX-8 mit 8 µm mittlerer Teilchengröße eingewogen, taumelgemischt und auf einem 35 mm-Einschneckenextruder Schmelze-compoundiert. Das anschließende Spritzgießen zu Formteilen erfolgte mit einem Heißkanalwerkzeug mit den in Tabelle 3 angegebenen Parametern. Aus der Formmasse wurden quadratische Platten (100 x 100 mm) spritzgegossen, die vier quadratische Segmente mit verschiedenen Wandddicken von 1, 2, 3 und 4 mm aufweisen.

### Beispiel 2: Formteil aus Polymerisat A mit Streumittel TOSPEARL® 120

Zur Herstellung der Formmasse wurden 10 kg Polymerisat A glasklar und 0,3 kg TOSPEARL® 120 wie in Beispiel 1 beschrieben zu einer Formmasse verarbeitet. Das anschließende Spritzgießen zu Formteilen erfolgte mit einem Heißkanalwerkzeug mit den in Tabelle 3 angegebenen Parametern. Aus der Formmasse wurden quadratische Platten (100 x 100 mm) spritzgegossen, die vier quadratische Segmente mit verschiedenen Wandddicken von 1, 2, 3 und 4 mm aufweisen.

### Beispiel 3: Formteil aus Polymerisat A mit Streumittel TOSPEARL® 3120

Zur Herstellung der Formmasse wurden 10 kg Polymerisat A glasklar und 0,3 kg TOSPEARL® 3120 wie in Beispiel 1 beschrieben zu einer Formmasse verarbeitet. Das anschließende Spritzgießen zu Formteilen erfolgte mit einem Heißkanalwerkzeug mit den in Tabelle 3 angegebenen Parametern. Aus der Formmasse wurden quadratische Platten (100 x 100 mm) spritzgegossen, die vier quadratische Segmente mit verschiedenen Wandddicken von 1, 2, 3 und 4 mm aufweisen.

### Beispiel 4: Formteil aus Polymerisat A mit Streumittel Polymerisat C

Zur Herstellung der Formmasse wurden 10 kg Polymerisat A und 0,3 kg Polymerisat C wie in Beispiel 1 beschrieben zu einer Formmasse verarbeitet. Aus der Formmasse wurden quadratische Platten (100 x 100 mm) spritzgegossen, die vier quadratische Segmente mit verschiedenen Wandddicken von 1, 2, 3 und 4 mm aufweisen.

### Vergleichsbeispiel:

### Formteil aus Polymerisat B

Aus Polymerisat B wurden auf einer Spritzgießmaschine DEMAG D 150 mittels eines Heißkanal-Spritzgießwerkzeuges mit den in Tabelle 3 angegebenen Parametern Platten 100 x 100 x 1/2/3/4 mm spritzgegossen.

Die Beurteilung der optischen Qualität der spritzgegossenen Prüfkörper erfolgte visuell. Als Beurteilungskriterium dienten die Ausprägung von Bindenähten sowie von Inhomogenitäten (Wolken, Schlieren) im Formteil. Die erhaltenen Ergebnisse sind in der nachfolgenden Tabelle zusammengefasst. In der Tabellen wurde ein nicht vorhandenes Merkmal mit ++, eine geringe Ausprägung des Merkmals mit +, eine deutliche Ausprägung mit - und eine sehr deutliche Ausprägung mitgekennzeichnet.

**Tabelle 4: Optische Beurteilung der Formteile**

| | Fließnähte | Wolken | Schlieren | Oberflächenfehler |
|---|---|---|---|---|
| Beispiel 1 (Techpolymer® SBX-8) | + | ++ | ++ | ++ |
| Beispiel 2 (TOSPEARL® 120) | + | ++ | ++ | ++ |
| Beispiel 3 (TOSPEARL® 3120) | + | ++ | ++ | ++ |
| Beispiel 4 (Polymerisat C) | - | + | + | + |
| Vergleichsbeispiel Polymerisat B | -- | -- | - | - |

## Patentansprüche

1. Verfahren zur Herstellung eines lichtstreuenden, komplexen Formteils, das unterschiedliche Wanddicken, einen oder mehrere Durchbruch/Durchbrüche, mindestens eine nicht ebene Oberfläche oder eine Kombination solcher Merkmale aufweist, wobei man in einem Spritzgießverfahren eine Formmasse einsetzt, welche eine Matrix aus mindestens 30 Gew. %, bezogen auf das Gesamtgewicht der Formmasse, Polymethyl(meth)acrylat, erhalten durch radikalische Polymerisation von Mischungen, die, bezogen auf das Gesamtgewicht der Monomere, mindestens 40 Gew.-% Methyl(meth)acrylat enthalten, und darin eingelagerte sphärische Kunststoffpartikel mit einer Teilchengröße im Bereich von 1 bis 24 µm in einer Konzentration im Bereich von 0,05 bis 30 Gew.-% bezogen auf das Gewicht des Polymethyl(meth)acrylats umfasst, wobei die Polymethyl(meth)acrylate der Matrix der eingesetzten Formmasse einen Brechungsindex im Bereich von 1,46 bis 1,54 aufweisen, gemessen bei der Na-D-Linie (589nm) und bei 20°C und die sphärischen Partikel einen Brechungsindexunterschied zur Polymethyl(meth)acrylat-Matrix von 0,01 bis 0,2 aufweisen, wobei das Gewichtsmittel des Molekulargewichts Mw der in der Formmasse zu verwendenden Homo- und/oder Copolymere im Bereich zwischen 20000 und 1000000 g/mol liegt.

2. Verfahren gemäß Anspruch 1, **dadurch gekennzeichnet, dass** man ein Formteil herstellt, dessen Wanddicke im Bereich von 1 - 30 mm liegt.

3. Verfahren gemäß einem oder mehreren der vorhergehenden Ansprüche, **dadurch gekennzeichnet, dass** man ein Formteil herstellt, bei dem die Differenz zwischen minimaler und maximaler Wanddicke mehr als 1 mm beträgt.

4. Verfahren gemäß einem oder mehreren der vorhergehenden Ansprüche, **dadurch gekennzeichnet, dass** man ein Formteil herstellt, bei welchem das Verhältnis von minimaler zu maximaler Wanddicke ≥ 1:2 beträgt.

5. Verfahren nach einem oder mehreren der vorhergehenden Ansprüche, **dadurch gekennzeichnet, dass** bei der eingesetzten Formmasse der Gewichtsanteil der sphärischen Kunststoffpartikel 0,1 - 25 Gew.-% bezogen auf das Gewicht des Polymethyl(meth)acrylats beträgt.

6. Verfahren gemäß einem oder mehreren der vorhergehenden Ansprüche, **dadurch gekennzeichnet, dass** die Größe der sphärischen Kunststoffpartikel in der eingesetzten Formmasse im Bereich von 2 bis 15 µm liegt.

7. Verfahren gemäß einem oder mehreren der vorhergehenden Ansprüche, **dadurch gekennzeichnet, dass** mindestens 60 % der sphärischen Kunststoffpartikel in der eingesetzten Formmasse eine Größe von mindestens 1 µm und höchstens 30 % der sphärischen Kunststoffpartikel eine Größe von mehr als 15 µm aufweisen.

8. Verfahren gemäß einem oder mehreren der vorhergehenden Ansprüche, **dadurch gekennzeichnet, dass** die sphärischen Kunststoffpartikel in der eingesetzten Formmasse vernetzte Silikone und/oder vernetztes Polystyrol und/oder vernetzte Copolymere basierend auf (Meth)acrylaten und Styrol umfassen.

9. Verfahren gemäß einem oder mehreren der vorhergehenden Ansprüche, **dadurch gekennzeichnet, dass** die eingesetzte Formmasse Additive und/oder Farbstoffe enthält.

10. Verfahren gemäß einem oder mehreren der vorhergehenden Ansprüche, **dadurch gekennzeichnet, dass** die Temperatur der geschmolzenen Formmasse 210-270 °C beträgt.

11. Verfahren gemäß einem oder mehreren der vorhergehenden Ansprüche, **dadurch gekennzeichnet, dass** die Temperatur der Spritzgießdüse 230-270 °C beträgt.

12. Verfahren gemäß einem oder mehreren der vorhergehenden Ansprüche, **dadurch gekennzeichnet, dass** die Temperatur des Spritzgießwerkzeugs 40-80 °C beträgt.

13. Verfahren gemäß einem oder mehreren der vorhergehenden Ansprüche, **dadurch gekennzeichnet, dass** die Temperatur des Zylinders 220-260°C beträgt.

14. Verfahren gemäß einem oder mehreren der vorhergehenden Ansprüche, **dadurch gekennzeichnet, dass** die Formmassenschmelze mit einem Druck im Bereich von 50 - 1000 bar in das Spritzgießwerkzeug eingespritzt wird.

15. Verfahren gemäß einem oder mehreren der vorhergehenden Ansprüche, **dadurch gekennzeichnet, dass** die Einspritzgeschwindigkeit gestuft ist in der ersten Stufe im Bereich von 0,01 m/s bis 0,1 m/s in der zweiten Stufe im Bereich von 0,1m/s bis 1 m/s und in einer möglichen dritten Stufe im Bereich von 0,05 m/s bis 0,5m/s.

16. Verfahren gemäß einem oder mehreren der vorhergehenden Ansprüche, **dadurch gekennzeichnet, dass** der Dosierweg das 1fach bis 4 fache des Schneckendurchmessers beträgt

17. Verfahren gemäß einem oder mehreren der vorhergehenden Ansprüche, **dadurch gekennzeichnet, dass** man ein Formteil herstellt, das einen Energiehalbwertswinkel von ≥ 5° aufweist.

18. Verfahren gemäß einem oder mehreren der vorhergehenden Ansprüche, **dadurch gekennzeichnet, dass** man ein Formteil herstellt, das einen Intensitätshalbwertswinkel von ≥ 1,5° aufweist.

19. Verfahren gemäß einem oder mehreren der vorhergehenden Ansprüche, **dadurch gekennzeichnet, dass** man ein Formteil herstellt, das bei einer Schichtdicke von 3 mm eine Lichttransmission von größer oder gleich 50% aufweist.

20. Verfahren gemäß einem oder mehreren der vorhergehenden Ansprüche, **dadurch gekennzeichnet, dass** man ein Formteil herstellt, das einen Gelbwert von kleiner oder gleich 12 aufweist.

21. Verfahren gemäß einem oder mehreren der vorhergehenden Ansprüche, **dadurch gekennzeichnet, dass** man ein Formteil herstellt, das eine Streckspannung gemäß ISO 527 von ≥ 70 MPa aufweist.

## Claims

1. Process for producing a light-scattering, complex moulding which has different wall thicknesses, one or more perforations, at least one non-planar surface or a combination of these features, where an injection-moulding process uses a moulding composition which comprises a matrix composed of at least 30% by weight, based on the total weight of the moulding composition, of polymethyl (meth)acrylate obtained by free-radical polymerization of mixtures which, based on the total weight of the monomers, comprise at least 40% by weight of methyl (meth)acrylate, and which also comprises, embedded therein, spherical plastics particles whose size is in the range from 1 to 24 µm, at a concentration in the range from 0.05 to 30% by weight, based on the weight of the polymethyl (meth)acrylate, where the polymethyl (meth)acrylates of the matrix of the moulding composition used have a refractive index in the range from 1.46 to 1.54, measured for the Na D line (589 nm) at 20°C, and the refractive index of the spherical particles differs from that of the polymethyl (meth)acrylate matrix by from 0.01 to 0.2, where the weight-average molar mass Mw of the homo- and/or copolymers to be used in the moulding composition is in the range from 20 000 to 1 000 000 g/mol.

2. Process according to Claim 1, **characterized in that** the moulding produced has a wall thickness in the range from 1 to 30 mm.

3. Process according to one or more of the preceding claims, **characterized in that** the moulding produced has a difference of more than 1 mm between minimum and maximum wall thickness.

4. Process according to one or more of the preceding claims, **characterized in that** the moulding produced has a minimum-to-maximum wall thickness ratio ≥ 1:2.

5. Process according to one or more of the preceding claims, **characterized in that**, in the moulding composition used, the proportion by weight of the spherical plastics particles is from 0.1 to 25% by weight, based on the weight of the polymethyl (meth)acrylate.

6. Process according to one or more of the preceding claims, **characterized in that** the size of the spherical plastics particles in the moulding composition used is in the range from 2 to 15 µm.

7. Process according to one or more of the preceding claims, **characterized in that** at least 60% of the spherical plastics particles in the moulding composition used has a size of at least 1 µm, and at most 30% of the spherical plastics particles have a size of more than 15 µm.

8. Process according to one or more of the preceding claims, **characterized in that** the spherical plastics particles in the moulding composition used comprise crosslinked silicones and/or crosslinked polystyrene, and/or crosslinked copolymers based on meth(acrylates) and styrene.

9. Process according to one or more of the preceding claims, **characterized in that** the moulding composition used comprises additives and/or dyes.

10. Process according to one or more of the preceding claims, **characterized in that** the temperature of the molten moulding composition is from 210 to 270°C.

11. Process according to one or more of the preceding claims, **characterized in that** the temperature of the injection-moulding nozzle is from 230 to 270°C.

12. Process according to one or more of the preceding claims, **characterized in that** the temperature of the injection mould is from 40 to 80°C.

13. Process according to one or more of the preceding claims, **characterized in that** the temperature of the cylinder is from 220 to 260°C.

14. Process according to one or more of the preceding claims, **characterized in that** the moulding composition melt is injected with a pressure in the range from 50 to 1000 bar into the injection moulding.

15. Process according to one or more of the preceding claims, **characterized in that** the injection rate has been staged, and is in the range from 0.01 to 0.1 m/s in the first stage, and is in the range from 0.1 to 1 m/s in the second stage, and is in the range from 0.05 m/s to 0.5 m/s in a possible third stage.

16. Process according to one or more of the preceding claims, **characterized in that** the metering stroke is from 1 to 4 times the screw diameter.

17. Process according to one or more of the preceding claims, **characterized in that** the moulding produced has a halved-energy angle ≥ 5°.

18. Process according to one or more of the preceding claims, **characterized in that** the moulding produced has a halved-intensity angle ≥ 1.5°.

19. Process according to one or more of the preceding claims, **characterized in that** the moulding produced has a light transmittance greater than or equal to 50% for a layer of thickness 3 mm.

20. Process according to one or more of the preceding claims, **characterized in that** the moulding produced has a yellowness index smaller than or equal to 12.

21. Process according to one or more of the preceding claims, **characterized in that** the moulding produced has a yield stress ≥ 70 MPa to ISO 527.

## Revendications

1. Procédé de fabrication d'une pièce moulée complexe dispersant la lumière, qui présente différentes épaisseurs de paroi, une ou plusieurs perforations, au moins une surface non plane ou une combinaison de telles caractéristiques, selon lequel une matière à mouler est utilisée dans un procédé de moulage par injection, ladite matière à mouler contenant une matrice, constituée d'au moins 30 % en poids, par rapport au poids total de la matière à mouler, de poly(méth)acrylate de méthyle, obtenue par polymérisation radicalaire de mélanges qui contiennent, par rapport au poids total des monomères, au moins 40 % en poids de (méth)acrylate de méthyle, et des particules en plastique sphériques incorporées dans celle-ci, d'une taille de particule dans la plage allant de 1 à 24 µm, en une concentration dans la plage allant de 0,05 à 30 % en poids, par rapport au poids du poly(méth)acrylate de méthyle, les poly(méth)acrylates de méthyle de la matrice de la matière à mouler utilisée présentant un indice de réfraction dans la plage allant de 1,46 à 1,54, mesuré pour la raie D du sodium (589 nm) et à 20 ° °C, et les particules sphériques présentant une différence d'indice de réfraction par rapport à la matrice de poly(méth)acrylate de méthyle de 0,01 à 0,2, la moyenne en poids du poids moléculaire Mw des homo- et/ou copolymères à utiliser dans la matière à mouler se situant dans la plage comprise entre 20 000 et 1 000 000 g/mol.

2. Procédé selon la revendication 1, **caractérisé en ce qu'**une pièce moulée dont l'épaisseur de paroi se situe dans la plage allant de 1 à 30 mm est fabriqué.

3. Procédé selon une ou plusieurs des revendications précédentes, **caractérisé en ce qu'**une pièce moulée dont la différence entre l'épaisseur de paroi minimale et l'épaisseur de paroi maximale est de plus de 1 mm est fabriquée.

4. Procédé selon une ou plusieurs des revendications précédentes, **caractérisé en ce qu'**une pièce moulée dont le rapport entre l'épaisseur de paroi minimale et l'épaisseur de paroi maximale est ≥ 1:2 est fabriquée.

5. Procédé selon une ou plusieurs des revendications précédentes, **caractérisé en ce que** la proportion en poids des particules en plastique sphériques dans la matière à mouler utilisée est de 0,1 à 25 % en poids, par rapport au poids du poly(méth)acrylate de méthyle.

6. Procédé selon une ou plusieurs des revendications précédentes, **caractérisé en ce que** la taille des particules en plastique sphériques dans la matière à mouler utilisée se situe dans la plage allant de 2 à 15 µm.

7. Procédé selon une ou plusieurs des revendications précédentes, **caractérisé en ce qu'**au moins 60 % des particules en plastique sphériques dans la matière à mouler utilisée présentent une taille d'au moins 1 µm et au plus 30 % des particules en plastique sphériques présentent une taille de plus de 15 µm.

8. Procédé selon une ou plusieurs des revendications précédentes, **caractérisé en ce que** les particules en plastique sphériques dans la matière à mouler utilisée comprennent des silicones réticulées et/ou du polystyrène réticulé et/ou des copolymères réticulés à base de (méth)acrylates et de styrène.

9. Procédé selon une ou plusieurs des revendications précédentes, **caractérisé en ce que** la matière à mouler utilisée contient des additifs et/ou des colorants.

10. Procédé selon une ou plusieurs des revendications précédentes, **caractérisé en ce que** la température de la matière à mouler fondue est de 210 à 270 °C.

11. Procédé selon une ou plusieurs des revendications précédentes, **caractérisé en ce que** la température de la buse de moulage par injection est de 230 à 270 °C.

12. Procédé selon une ou plusieurs des revendications précédentes, **caractérisé en ce que** la température de l'outil de moulage par injection est de 40 à 80 °C.

13. Procédé selon une ou plusieurs des revendications précédentes, **caractérisé en ce que** la température du cylindre est de 220 à 260 °C.

14. Procédé selon une ou plusieurs des revendications précédentes, **caractérisé en ce que** la masse fondue de matière à mouler est injectée à une pression dans la plage allant de 50 à 1 000 bar dans l'outil de moulage par injection.

15. Procédé selon une ou plusieurs des revendications précédentes, **caractérisé en ce que** la vitesse d'injection est échelonnée, lors de la première étape dans la plage allant de 0,01 m/s à 0,1 m/s, lors de la deuxième étape dans la plage allant de 0,1 m/s à 1 m/s et, lors d'une éventuelle troisième étape, dans la plage allant de 0,05 m/s à 0,5 m/s.

16. Procédé selon une ou plusieurs des revendications précédentes, **caractérisé en ce que** la course de dosage fait de 1 à 4 fois le diamètre de la vis.

17. Procédé selon une ou plusieurs des revendications précédentes, **caractérisé en ce qu'**une pièce moulée qui présente un angle de demi-valeur d'énergie ≥ 5° est fabriquée.

18. Procédé selon une ou plusieurs des revendications précédentes, **caractérisé en ce qu'**une pièce moulée qui présente un angle de demi-valeur d'intensité ≥ 1,5° est fabriquée.

19. Procédé selon une ou plusieurs des revendications précédentes, **caractérisé en ce qu'**une pièce moulée qui présente une transmission de la lumière supérieure ou égale à 50 % à une épaisseur de couche de 3 mm est fabriquée.

20. Procédé selon une ou plusieurs des revendications précédentes, **caractérisé en ce qu'**une pièce moulée qui présente un indice de jaune inférieur ou égal à 12 est fabriquée.

21. Procédé selon une ou plusieurs des revendications précédentes, **caractérisé en ce qu'**une pièce moulée qui présente une limite d'élasticité selon ISO 527 ≥ 70 MPa est fabriquée.
